# EUROPÄISCHE PATENTSCHRIFT

(11) **EP 0 591 294 B1**
(45) Veröffentlichungstag und Bekanntmachung des Hinweises auf die Patenterteilung: **08.03.1995**
(21) Anmeldenummer: 92912695.1
(22) Anmeldetag: 23.06.1992
(51) Int. Cl.: F16L 55/00, G01M 3/18

(54) **GAS- UND/ODER FLÜSSIGKEITSFÜHRENDE ROHRLEITUNG**
GAS AND/OR LIQUID TUBULAR DUCT
CONDUITE DE GAZ ET/OU DE LIQUIDE

(30) Priorität: 26.06.1991 DE 9107869 U; 17.08.1991 DE 9110188 U
(43) Veröffentlichungstag der Anmeldung: 13.04.1994
(73) Patentinhaber: Dipl.-Ing. Wrede & Niedecken Verwaltung GmbH, D-50389 Wesseling (DE); W.L. Gore & Associates GmbH, 85636 Putzbrunn (DE)
(72) Erfinder: SERWATZKY, Helga, D-5482 Grafschaft 6 (DE)
(74) Vertreter: Becker, Thomas, Dr., Dipl.-Ing.
(86) Internationale Anmeldenummer: DE9200524
(87) Internationale Veröffentlichungsnummer: WO9300547

(56) Entgegenhaltungen:
- EP-A- 0 298 479
- DE-A- 2 822 769
- DE-C- 579 184
- DE-C- 721 463
- GB-A- 2 058 279

## Beschreibung

Die Erfindung betrifft eine gas- und/oder flüssigkeitsführende Rohrleitung. Im Anlagenbau, in Raffinerien, chemischen Unternehmen oder dergleichen werden Rohrleitungen verwendet. Sie dienen vorwiegend zum Transport von Gasen und Flüssigkeiten und sind häufig sowohl thermisch als auch schallmäßig isoliert.

Aus der DE 37 11 869 C2 ergibt sich, daß Rohrleitungen üblicherweise wie folgt aufgebaut sind: der Rohrkörper wird von einer Isolierung umgeben, um die herum ein äußerer Blechmantel angeordnet ist.

Eine Leckageanzeige ist bei einer solchen Ausführungsform grundsätzlich möglich, zum Beispiel über ein in der Isolierung angeordnetes Leckmeldekabel. Entsprechende Anordnungen sind aus den GB 2 058 279 A, EP 0 298 479 A2 und DE 721 463 C bekannt. Es hat sich aber gezeigt, daß die Ansprechzeit, also die Zeit zwischen dem Auftreten einer Leckage und deren Registrierung zum Teil erheblich ist, weil zum Beispiel austretende Flüssigkeit erst durch die Isolierung bis zur jeweiligen Meßstelle vordringen muß.

Andererseits ist für verschiedene Anwendungszwecke eine Isolierung überflüssig. Bei solchen Rohrleitungen wäre es zu aufwendig, einen "Doppelmantel" mit entsprechenden Abstandhaltern zwischen dem Rohrkörper und der Blechummantelung auszubilden. Gerade für diesen Anwendungsbereich fehlen aber praktikable Lösungsvorschläge.

Der Erfindung liegt die Aufgabe zugrunde, eine gas- und/oder flüssigkeitsführende Rohrleitung anzubieten, die einfach aufgebaut ist und eine möglichst schnell ansprechende Anzeigemöglichkeit im Leckagefall bietet.

In ihrer allgemeinsten Ausführungsform weist die Rohrleitung folgende Merkmale auf:
- in der Nachbarschaft zum Rohrkörper wird eine Meßleitung angeordnet,
- der Rohrkörper und die Meßleitung werden von einer gas- und flüssigkeitsdichten Umhüllung aus einer strukturierten Folie gemeinsam eingefaßt, die innenseitig zumindest im unmittelbaren Kontaktbereich mit dem Rohrkörper zwischen Umhüllung und Rohrkörper durchgehende Verbindungskanäle aufweist,
- dabei wird die Meßleitung so ausgebildet, daß sie eine Änderung des Drucks, der elektrischen Leitfähigkeit, der Absorptionsbanden und/oder des Aggregatzustandes des Mediums im Raum zwischen Umhüllung und Rohrkörper beziehungsweise Meßleitung registriert.

Wird die Meßleitung in einer eigenen Aufnahme angeordnet, die selbst gas- und/oder flüssigkeitsdurchlässig ist, so umfaßt die Umhüllung die Aufnahme mit der integrierten Meßleitung und ist vorzugsweise auch im Umschlingungsbereich der Aufnahme auf die beschriebene Art und Weise ausgebildet.

Die Meßleitung (nach der ersten Ausführungsform) beziehungsweise die Aufnahme mit der Meßleitung (nach der zweiten Ausführungsform) werden vorzugsweise direkt auf der Außenfläche des Rohrkörpers angeordnet und jeweils gemeinsam von einer Umhüllung umschlossen. Da sowohl der Rohrkörper als auch die Aufnahme (Meßleitung) normalerweise einen Kreisquerschnitt aufweisen, wobei der Querschnitt der Aufnahme (Meßleitung) sehr viel geringer ist als der des Rohrkörpers, ergibt sich für die Umhüllung bei paralleler Anordnung von Rohrleitung und Aufnahme (Meßleitung) ein im wesentlichen eiförmiger Querschnitt.

Nach einer Ausgestaltung der Erfindung wird die Meßleitung in einer rohrförmigen und mit Durchbrechungen auf der Umfangswand ausgebildeten Aufnahme konfektioniert. Wichtig ist, daß die Aufnahme gas- und/oder flüssigkeitsdurchlässig ist, wie noch beschrieben wird. Die Aufnahme weist bevorzugt einen Innendurchmesser auf, der größer als der Außendurchmesser der Meßleitung ist, so daß die Meßleitung mit Spiel in der Aufnahme aufgenommen werden kann.

Die Aufnahme hat den Vorteil, daß eine Meßleitung auch zu einem späteren Zeitpunkt, zum Beispiel erst an der Baustelle, in die Aufnahme eingezogen und eine Meßleitung nach Entnahme aus der Aufnahme gegen eine andere Meßleitung ausgetauscht werden kann.

Vorzugsweise besteht die Aufnahme aus einem deformierbaren Körper, so daß sie sich auch Krümmungsabschnitten der Rohrleitung anpaßt. Eine besonders einfache und funktionstüchtige Aufnahme besteht aus einem Körper in Form einer Spirale, ähnlich einer Spiralfeder.

Die Umhüllung soll nicht wie eine "zweite Haut" die Oberfläche des Rohrkörpers und der Aufnahme (nach der ersten Ausführungsform: der Meßleitung alleine) bedecken, sondern im Gegenteil so ausgebildet sein, daß im Kontaktbereich (Umschlingungsbereich) mit dem Rohrkörper und - falls gewünscht - der Aufnahme (Meßleitung) innenseitig stets gas- und/oder flüssigkeitsdurchlässige Kanäle verbleiben.

Auf diese Weise wird sichergestellt, daß im Leckagefall (Gas- oder Flüssigkeitsaustritt aus der Rohrleitung) das Gas beziehungsweise die Flüssigkeit direkt auf kürzestem Wege sich frei - und damit in Richtung der Meßleitung - ausbreiten kann, so daß die Leckage von der Meßleitung quasi verzögerungsfrei erfaßt wird.

Dabei bietet es sich an, die Meßleitung (beziehungsweise die Aufnahme mit der Meßleitung) unterhalb des Rohrkörpers vorzusehen, sofern die Rohrleitung horizontal verläuft. So wird sichergestellt, daß austretende Flüssigkeit schon durch Gravitationseinflüsse den direkten Weg in Richtung auf die Meßleitung nimmt.

Alternativ wird vorgeschlagen, die vorzugsweise rohrförmige Aufnahme (beziehungsweise die Meßleitung) wendelförmig um die Rohrleitung herumzuführen. In diesem Fall verläuft die Umhüllung um die Aufnahme (beziehungsweise Meßleitung) herum.

Für die Ausbildung der Umhüllung bieten sich verschiedene Alternativen an. Das wichtigste gemeinsame Merkmal - neben der Gas- und Flüssigkeitsdichtigkeit - besteht in der Strukturierung der inneren Oberfläche, damit austretendes Gas oder austretende Flüssigkeit im Raum zwischen Umhüllung und Rohrkörper beziehungsweise zwischen Umhüllung und Aufnahme (Meßleitung) frei ausfließen kann.

Vorzugsweise besteht die Umhüllung aus einer entsprechend strukturierten Metallfolie. Dabei ist eine Aluminium-Grobkornfolie bevorzugt. Eine solche Grobkornfolie hat eine Art "Noppenstruktur", so daß ein netzartiges Kanalsystem innenseitig ausgebildet wird. Auch entsprechende Kunststoffolien sind einsetzbar. Die Umhüllung kann aus einzelnen Segmenten bestehen, die im Stoßbereich zusätzlich versiegelt werden können. Es ist aber auch möglich, die Umhüllung nach Art einer Bandage auszubilden, wobei sich die einzelnen Wicklungen stets in einer bestimmten Breite überlappen. Die so konfektionierte Rohrleitung kann im Innen- und Außenbereich eingesetzt werden. Die Umhüllung erfüllt gleichzeitig die Funktion eines Bewitterungsschutzes.

Bezüglich konkreter Bauformen der Meßleitung kann auf bekannte Kabel zurückgegriffen werden, wie sie beispielsweise in den DE 39 04 894 C1, DE 40 00 699 C1 und DE 28 22 769 C2 beschrieben sind, auf deren Offenbarungsgehalt Bezug genommen wird. Durch die Veränderung der Umgebung der Meßleitung im Falle einer Leckage (zum Beispiel dringt eine Flüssigkeit ein, wo vorher Luft war) wird die Meßleitung aktiviert. Dabei kann zum Beispiel eine Kapazitätsänderung des Kabels angezeigt werden. Dadurch, daß das Medium, das im Rohrkörper gefördert wird, in der Regel unter Druck steht, wird ein Leckagefall auch zu einer Druckerhöhung im Raum zwischen Rohrkörper und Umhüllung führen, so daß die Meßleitung auch aus einer Einrichtung nach Art eines Manometers bestehen kann, die Druckänderungen mißt. Derartige Drucksensoren sind im Stand der Technik bekannt. Besonders bevorzugt, weil einfach aufgebaut und leicht zu verlegen, sind jedoch Meßleitungen in Form elektrischer Widerstandsdrähte.

Die Umhüllung kann von einer Isolierschicht und einem äußeren Bewitterungsschutz umgeben werden, sofern dies gewünscht wird. Eine solche Ausführungsform wird insbesondere im Außenbereich Anwendung finden.

Noch einfacher ist es, die Umhüllung unmittelbar mit einer monolithischen Abdeckmasse, insbesondere einer witterungsbeständigen Abdeckmasse zu beschichten. Diese Abdeckmasse ist vorzugsweise wasserdicht, so daß die entsprechende Rohrleitung auch im Außenbereich eingesetzt werden kann, aber atmungsaktiv. Hierdurch wird eine Kondenswasserbildung auf der Umhüllung vermieden.

Eine solche Abdeckmasse kann organisch oder anorganisch sein. Vorzugsweise handelt es sich um eine flexible, feuerresistente Beschichtung, die frei von organischen Lösungsmitteln ist. Ein entsprechendes Produkt wird unter der Kennzeichnung "Foster 30 - 80" von der TEMATI GmbH, Bücklersstraße 18 - 22, 4060 Viersen 11 - Dülken, angeboten.

Die Beschichtung kann aufgespritzt, aufgepinselt oder durch Tauchen aufgebracht werden. Ebenso ist es aber auch hier wieder möglich, die Beschichtung nach Art einer Bandage aufzuwickeln. Eine Schichtdicke von 1 bis 2 mm reicht in der Regel aus.

Die Rohrleitung kann in endlichen Stücken vorkonfektioniert und zum Beispiel an einer Baustelle zu längeren Strecken zusammengebaut werden. Die Anschlußbereiche werden an der Baustelle geschlossen. Hierdurch wird der Montageaufwand deutlich verringert.

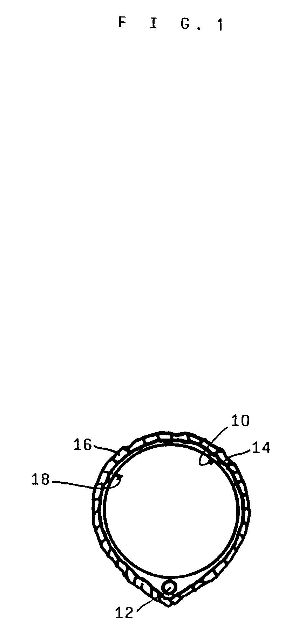

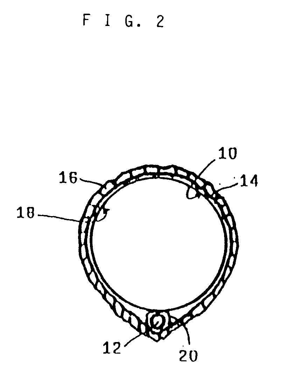

Die Erfindung wird nachstehend anhand von zwei Ausführungsbeispielen näher erläutert. Dabei zeigen die Figuren 1 und 2 in stark schematisierter Darstellung jeweils den Querschnitt durch eine erfindungsgemäße Rohrleitung.

### Figur 1:

Mit dem Bezugszeichen 10 ist ein zylindrischer Rohrkörper dargestellt. Unterhalb des Rohrkörpers 10 verläuft ein elektrisches Leckage-Meldekabel 12, das ebenfalls einen Kreisquerschnitt aufweist, der jedoch - wie dargestellt - deutlich geringer ist als der Querschnitt des Rohrkörpers 10. Beide Teile 10, 12 verlaufen parallel zueinander und werden gemeinsam umschlossen von einer Aluminium-Grobkornfolie 14, die noppenartig strukturiert ist und so auch im Umschlingungsbereich von Rohrkörper 10 beziehungsweise Kabel 12 eine Gas- und Flüssigkeitsdurchlässigkeit (Gas- und Flüssigkeitskanäle) ermöglicht beziehungsweise ausbildet.

Die Folie 14 schließlich wird von einer feuerhemmenden organischen, monolithischen Beschichtungsmasse 16 abgedeckt, die auf die Folie 14 aufgepinselt wurde. Die Schicht 16 ist wasserdicht, aber atmungsaktiv.

Im Fall einer Leckage, zum Beispiel bei 18, kann die im Rohrkörper 10 geförderte Flüssigkeit nicht nur austreten, sondern durch die offenen Kanäle, die zwischen der Folie 14 und der Oberfläche des Rohrkörpers 10 ausgebildet werden, nach unten abfließen, wobei die Flüssigkeit praktisch verzögerungsfrei in den Bereich des Leckage-Meldekabels 12 gelangt, wo die Änderung des elektrischen Widerstandes des Meßdrahtes sofort über eine angeschlossene Meßeinheit (nicht dargestellt) registriert und angezeigt wird.

### Figur 2:

Unterhalb des Rohrkörpers 10 verläuft hier ein elektrisches Leckage-Meldekabel 12 in einer spiralartigen, rohrförmigen Aufnahme 20. Beide Teile 10, 20 verlaufen parallel zueinander und werden gemeinsam umschlossen von einer Aluminium-Grobkornfolie 14, wie sie anhand der Figur 1 beschrieben wurde.

Wie die Figur zeigt, ist der Innendurchmesser der Aufnahme 20 größer als der Außendurchmesser des Kabels 12, aber kleiner als der Durchmesser des Rohrkörpers 10.

Im Leckagefall gilt das zur Figur 1 Gesagte analog mit der Maßgabe, daß die zum Beispiel austretende Flüssigkeit durch die Aufnahme' 20 fließt und dann die Meßleitung erreicht, um den Leckagefall anzuzeigen.

## Patentansprüche

1. Gas- und/oder flüssigkeitsführende Rohrleitung mit folgenden Merkmalen:
1.1 benachbart zum Rohrkörper (10) verläuft eine Meßleitung (12),
1.2 Rohrkörper (10) und Meßleitung (12) sind von einer gas- und/oder flüssigkeitsdichten Umhüllung aus einer strukturierten Folie (14) gemeinsam eingefaßt, die innenseitig zumindest im unmittelbaren Kontaktbereich mit dem Rohrkörper (10) zwischen Umhüllung (14) und Rohrkörper (10) durchgehende Verbindungskanäle aufweist, wobei
1.3 die Meßleitung (12) so ausgebildet ist, daß sie eine Änderung des Drucks, der elektrischen Leitfähigkeit, der Absorptionsbanden und/oder des Aggregatzustandes des Mediums im Raum zwischen Umhüllung (14) und Rohrkörper (10) beziehungsweise Meßleitung (12) registriert.

2. Rohrleitung nach Anspruch 1, bei der die Meßleitung (12) in einer gas- und/oder flüssigkeitsdurchlässigen Aufnahme (20) einliegt.

3. Rohrleitung nach Anspruch 1 oder 2, bei der die Umhüllung (14) aus einer Aluminium-Grobkornfolie besteht.

4. Rohrleitung nach einem der Ansprüche 1 bis 3, bei der die Umhüllung nach Art einer Bandage um den Rohrkörper und die Meßleitung verläuft

5. Rohrleitung nach einem der Ansprüche 1 bis 4, bei der Umhüllung (14) von einer Isolierschicht und einem äußeren Witterungsschutz umgeben ist.

6. Rohrleitung nach einem der Ansprüche 1 bis 4, bei der die Umhüllung (14) unmittelbar mit einer monolithischen, witterungsbeständigen Abdeckmasse (16) beschichtet ist.

7. Rohrleitung nach Anspruch 6, bei der die Abdeckmasse (16) atmungsaktiv, aber wasserdicht ist.

8. Rohrleitung nach einem der Ansprüche 1 bis 7, bei der die Aufnahme (20) beziehungsweise Meßleitüng (12) wendelförmig um den Rohrkörper (10) angeordnet ist.

9. Rohrleitung nach einem der Ansprüche 1 bis 7, bei der die Aufnahme (20) beziehungsweise Meßleitung (12) parallel zum Rohrkörper (10) angeordnet ist.

10. Rohrleitung nach einem der Ansprüche 2 bis 9, bei der die Aufnahme (20) mit Durchbrechungen auf der Umfangswand ausgebildet ist.

11. Rohrleitung nach einem der Ansprüche 2 bis 10, mit einer rohrförmigen Aufnahme (20) für die Meßleitung (12).

12. Rohrleitung nach einem der Ansprüche 2 bis 11, bei der die Aufnahme (20) aus einem biegsamen Körper besteht.

13. Rohrleitung nach einem der Ansprüche 2 bis 12, bei der der Innendurchmesser der Aufnahme (20) größer als der Außendurchmesser der aufzunehmenden Meßleitung (12) ist.

14. Rohrleitung nach einem der Ansprüche 2 bis 13, bei der die Aufnahme (20) aus einem spiralfederartigen Körper besteht.

15. Rohrleitung nach einem der Ansprüche 1 bis 14, bei der die Meßleitung (12) bei im wesentlichen horizontal verlaufenden Rohrleitungen unterhalb des Rohrkörpers (10) angeordnet ist.

16. Rohrleitung nach einem der Ansprüche 1 bis 15, bei der die Meßleitung (12) aus mindestens zwei elektrischen Leitern besteht, die im wesentlichen parallel zueinander angeordnet sind und durch ein kontinuierlich poröses Polytetrafluoräthylenmaterial, dessen Poren mit einem elektrisch leitenden Material imprägniert sind, voneinander getrennt sind.

## Claims

1. Gas- and/or liquid-carrying pipeline with the following characteristics:
1.1. a measuring line (12) extends adjacent to the pipe body (10),
1.2. the pipe body (10) and the measuring line (12) are together enclosed by a gas- and/or liquidtight structured jacket (14), which is structured on the inside such that continuous connecting channels extend between the jacket (14) and the pipe body (10) at least in the direct contact area with the pipe body (10), wherein
1.3. the measuring line (12) is designed such that it registers a change in the pressure, the electrical conductivity, the absorption bands, and/or the state of aggregation of the medium in the space between the jacket (14) and the pipe body (10) or the measuring line (12).

2. Pipeline in accordance with claim 1, in which the measuring line (12) lies in a support (20) that is permeable to gases and/or liquids.

3. Pipeline in accordance with claim 1 or 2, in which the jacket (14) consists of a coarsegrained aluminium foil.

4. Pipeline in accordance with one of the claims 1 through 3, in which the jacket extends in the form of a bandage around the pipe body and the measuring line.

5. Pipeline in accordance with one of the claims 1 through 4, in which the jacket (14) is surrounded by an insulating layer and an outer protection against weather.

6. Pipeline in accordance with one of the claims 1 through 4, in which the jacket (14) is directly coated with a monolithic, weather-resistant covering composition (16).

7. Pipeline an accordance with claim 6, in which the covering composition (16) actively breathes, but is water-tight.

8. Pipeline in accordance with one of the claims 1 through 7, in which the support (20) or the measuring line (12) is arranged helically around the pipe body (10).

9. Pipeline in accordance with one of the claims 1 through 7, in which the support (20) or the measuring line (12) is arranged in parallel to the pipe body (10).

10. Pipeline in accordance with one of the claims 2 through 9, in which the support (20) is provided with perforations on the circumferential wall.

11. Pipeline in accordance with one of the claims 2 through 10, with a tubular support (20) for the measuring line (12).

12. Pipeline in accordance with one of the claims 2 through 11, in which the support (20) consists of a flexible body.

13. Pipeline in accordance with one of the claims 2 through 12, in which the internal diameter of the support (20) is larger than the external diameter of the measuring line (12) to be accommodated.

14. Pipeline in accordance with one of the claims 2 through 13, in which the support (20) consists of a coil-spring-like body.

15. Pipeline in accordance with one of the claims 1 through 14, in which the measuring line (12) is arranged under the pipe body (10), with the pipelines extending essentially horizontally.

16. Pipeline in accordance with one of claims 1 through 15, in which the measuring line (12) consists of at least two electrical conductor lines which are arranged mostly parallel with respect to each other and separated by a continuous porous material of polytetrafluorethylene, which pores are impregnated with a material of electric conductivity.

## Revendications

1. Conduite tubulaire destinée au guidage du gaz et/ou de liquides présentant les caractéristiques ci-après :
1.1 une conduite de mesure (12) s'étend au voisinage du corps tubulaire (10),
1.2 le corps tubulaire (10) et la conduite de mesure (12) sont encloses conjointement par une enveloppe étanche au gaz et/ou liquides, réalisée en une feuille structurée (14) présentant en face intérieure, au moins dans la zone de contact directe avec le corps tubulaire (10), des canaux de liaison, s'étendant de façon ininterrompue entre l'enveloppe (14) et le corps tubulaire 10, où
1.3 la conduite de mesure (12) est réalisée de manière qu'elle enregistre une variation de la pression de la conductibilité électrique, des bandes d'adsorption et/ou de l'état de cohésion du fluide dans l'espace situé entre l'enveloppe (14) et le corps tubulaire (10), respectivement la conduite de mesure (12).

2. Conduite tubulaire selon la revendication 1, dans laquelle la conduite de mesure (12) est insérée dans un logement (20) étanche au gaz et/ou aux liquides

3. Conduite tubulaire selon la revendication 1 ou 2, dans laquelle l'enveloppe (14) est réalisée en feuille d'aluminium à gros grains.

4. Conduite tubulaire selon l'une revendications 1 à 3, dans laquelle l'enveloppe s'étend autour du corps tubulaire et de la conduite de mesure, à la façon d'un bandage.

5. Conduite tubulaire selon l'une revendications 1 à 4, dans laquelle l'enveloppe (14) est entourée par une couche isolante et une protection extérieure contre les intempéries.

6. Conduite tubulaire selon l'une revendications 1 à 4, dans laquelle l'enveloppe (14) est recouverte directement d'une masse de recouvrement (16) monolithique, résistante aux intempéries.

7. Conduite tubulaire selon la revendication 6, dans laquelle la masse de recouvrement (16) est perméable à l'air, mais est étanche à l'eau.

8. Conduite tubulaire selon l'une des revendications 1 à 7, dans laquelle le logement (20), respectivement la conduite de mesure (12), sont disposés en enroulement autour du corps tubulaire (10).

9. Conduite tubulaire selon l'une des revendications 1 à 8, dans laquelle le logement (20), respectivement la conduite de mesure (12), est disposé parallèlement au corps tubulaire (10).

10. Conduite tubulaire selon l'une des revendications 2 à 9, dans laquelle le logement (20) est réalisé avec des passages sur la paroi périphérique.

11. Conduite tubulaire selon l'une des revendications 2 à 10, avec un logement (20) tubulaire pour la conduite de mesure (12).

12. Conduite tubulaire selon l'une des revendications 2 à 11, dans laquelle le logement (20) est réalisé en un corps flexible.

13. Conduite tubulaire selon l'une des revendications 2 à 12, dans laquelle le diamètre intérieur du logement (20) est supérieur au diamètre extérieur de la conduite de mesure (12) à loger.

14. Conduite tubulaire selon l'une des revendications 2 à 13, dans laquelle le logement (20) est réalisé en un corps en forme de ressort spiral.

15. Conduite tubulaire selon l'une des revendications 1 à 14, dans laquelle la conduite de mesure (12) est disposée au-dessous du corps tubulaire (10), dans le cas où les conduites tubulaires s'étendent sensiblement horizontalement.

16. Conduite tubulaire selon l'une des revendications 1 à 15, dans laquelle la conduite de mesure (12) est composée d'au moins deux conducteurs électriques, disposés sensiblement parallèlement l'un par rapport à l'autre et séparés l'un de l'autre au moyen d'un matériau continu poreux à base de polytéthrafluoréthylène, dont les pores sont imprégnées d'un matériau conducteur de l'électricité.
